# EUROPEAN PATENT SPECIFICATION

(11) **EP 2 883 849 B1**
(45) Date of publication and mention of the grant of the patent: **13.02.2019**
(21) Application number: 13425157.8
(22) Date of filing: 10.12.2013
(51) Int. Cl.: C04B 18/02, B09B 3/00, B28B 1/00

(54) **PROCESS FOR PREPARATION OF ARTIFICIAL AGGREGATES FOR CONCRETE**
VERFAHREN ZUR HERSTELLUNG VON KÜNSTLICHEN AGGREGATEN FÜR BETON
PROCÉDÉ POUR LA PRÉPARATION D'AGRÉGATS ARTIFICIELS POUR BÉTON

(43) Date of publication of application: 17.06.2015
(73) Proprietor: Consorzio Cerea S.p.A., 37053 Cerea (VR) (IT)
(72) Inventor: Tavellin, Giuseppe Domenico, 37053 Cerea (Verona) (IT); Faccio, Andrea, 37134 Verona (IT); Sciuto, Alfio, 37045 Legnago (Verona) (IT); Bighignoli, Cesare, 37121 Verona (IT)
(74) Representative: Biggi, Cristina

(56) References cited:
- EP-A1- 0 109 506
- EP-A1- 2 272 598
- EP-A1- 2 468 695
- WO-A1-2013/156843
- WO-A2-03/048068
- FR-A1- 2 928 644
- US-A- 5 769 936

## Description

The present invention refers to a process for the preparation of a cement composition comprising raw materials recovered from waste. Said composition in the form, for example, of aggregates is useful in particular as an inert composition in the formulation of concretes and the like.

### Prior art

"Hazardous wastes" are those which present at least one of the hazard characteristics referred to in Annex 1 of Legislative Decree no. 152/2006, which comprises, for example, material harmful to health, heavy metals or chemical materials which make the waste classifiable according to the test methods described in Directive 67/548/EEC and/or according to the CLP regulation (for a general reference see for example www.echa.eu).

It is evident that unsuitable or incorrect disposal of such wastes can cause real environmental disasters either short-term or long-term, and the costs for containing such damage prove to be much higher than those actually required for the correct disposal of the toxic substances.

Usually the hazardous wastes are treated by means of chemical washing under pressure, in order to convert them into so-called "non-hazardous wastes", reusable as waste raw material or disposable in landfill sites. Washing, in fact, makes it possible to separate hazardous components from the treated mass, thus obtaining an inert final mass which can be reused as a waste raw material or disposed as an inert waste. In this connection, one of the possible uses is the utilization as an additive in the building sector, typically in the making of concrete.

Concrete is a conglomerate material of artificial origin, composed principally of a mixture of water, sand and gravel, binders and additives. Cement and hydraulic lime are frequently used as binders, while among the most used additives there can be used fluidizers which serve to reduce the amount of water, hardeners which are used to accelerate setting times and fillers, mineral derivatives of natural origin which are used to obtain a more structurally compact concrete. Minerals are added to improve some of the physical and mechanical properties of the concrete, such as for example structural strength and resistance to chemical action. Examples of mineral additives (or fillers) are limestone, microsilica, pozzolana and the like.

The patent application US 5 769 936 A discloses a process for producing granules by mixing an acrylamide polymer with fly ash, adding an inorganic solidifying agent, eg. cement, and granulating. The obtained granules are cured and used as aggregate in concrete or mortar.

The European patent application EP 2 272 598 A1 discloses a process to obtain aggregates from waste materials comprising the steps of screening, storing and curing the waste materials so that aggregates with reduced moisture content are obtained.

The international patent application WO2013/156843 discloses a process to manufacture a composition comprising cement, wherein cement, waste materials, sand, water, fluidizing additives, fillers and ash are mixed.

The applicants have found that when a particular waste material, for example heavy ashes resulting from incineration of wastes (whether they be urban and/or special wastes, hazardous and/or non-hazardous) is mixed with cement and inerting additives, it is possible to obtain a cement aggregate useful as an inert composition for formulating concrete which is usable in place of, or also in addition to, the commonly-used aggregates.

Alternatively, said aggregate can also be disposed of as non-hazardous waste, under current regulations on the subject.

### Summary of the invention

The present invention refers to a process for the preparation of a composition useful as an inert component for the formulation of concrete, comprising the following steps, preferably in the order indicated:
a) preselection and selection of a starting waste material,
b) screening,
c) optional storage,
d) demetallization,
e) storage,
f)
   - suitable mixing of the material obtained from step e) with a superfluidizing additive, preferably an aqueous solution having a concentration comprised between 25% and 35% by weight of acrylic polymers, free from formaldehyde;
   - addition of cement;
   - addition of an anionic acrylic polymer, preferably anionic polyacrylamide; and
   - subsequent addition of aluminium sulphate,
g) first controlled curing, preferably for a time comprised between 1 and 24 hours,
h) crushing,
i) second curing, preferably for at least 5 days.

In particular, at the end of the mixing step, the cement composition thus obtained is subjected to a first controlled curing, for a time approximately comprised between 1 and 24 hours, and to a crushing step, and is then allowed to rest at room temperature (by which is meant, comprised between about 10°C and 45°C), even more preferably for a time of at least 5 days, resulting in the final composition of the invention in the form of aggregates.

### Description of the drawings

Figure 1a: material obtained at the end of the step of mixing the waste material treated with the additive Dynamon-SP1®, cement and Re-Con Zero®, according to the present process, and not yet subjected to the step of first controlled curing g).
Figure 1b: material of figure 1a subjected to light pressure. The flattened form shows the ductility and softness of the material.
Figure 2: material obtained at the end of the present process, which presents features and physical properties similar to those of a stone.

### Detailed description

The term "material poor in clay" is intended to indicate a material having a clay content not greater than 5% by weight, compared with the total weight.

The term "waste material" is intended to indicate material coming from processes of disposing of hazardous or non-hazardous waste, such as for example: heavy ash, waste from thermal processes or even material arising from reclamation of polluted land, sludge from industrial treatment and the like. In the present invention, said waste material is characterized by comprising an organic fraction less than 1.5% by weight, by comprising heavy metals, and by being a material poor in clay.

The term "treated waste material" comprises within its meaning the material used in the present process in the mixing step, and obtained at the end of the treatments of screening, demetallization, acidification (if performed) and storage.

As indicated above, the present invention refers to a process for the preparation of a cement composition, which comprises the initial treatment of waste materials with steps of screening, storage, demetallization and, optionally, acidification. A treated waste material is thus obtained, which has optimal chemical and physical properties for the success of the subsequent step of controlled mixing.

To this end, the treated material is subjected to the step of mixing with cement and with fluidizing and stabilizing additives, as described below in detail, so as to severely limit the release of harmful substances from the final composition, which is obtained in the form of granules. In this way, in fact, the cement composition of the invention is obtained which is useful as an aggregate to be used for the formulation and preparation of concretes and the like, endowed with excellent stability and substantially inert.

The starting waste material of the present invention has preferably a grain size comprised between 1 and 20 mm, even more preferably comprised between 6 and 10 mm. It should be noted that a waste material with these dimensions, if not further processed, is usually too thin to be conveniently used as an aggregate for concrete. In the present process, dimensions greater than 20 mm could lead to final aggregates with physical characteristics which can be not convenient for the specific use as aggregates for concrete.

Preferably, the waste material of the present process is a material arising from hazardous wastes, these being defined e.g. by the European regulations on the subject, adopted in Italy by Part IV of Legislative Decree No. 152/2006 etc. Even more preferably, the waste material of the present process is selected between: heavy ash, waste from thermal processes, from reclamation of polluted land, sludge from industrial treatment, being heavy ash particularly preferred.

The starting waste material of the present process is furthermore characterized by having a moisture content measured at 25°C comprised between 5% and 25% by weight and by having an organic material content below 1.5%, preferably between 0.2% and 1% by weight.

To this end, in fact, it is noted that a moisture content not comprised within the range indicated could compromise the binding capacity of the cement, leading to the formation of friable aggregates or to aggregates endowed with low mechanical strength. Typically examples of organic material are timber and its derivatives, leaves, topsoil and the like.

Optimal moisture values can be achieved, for instance, by wetting or drying the incoming waste material, as the case may be. The waste material of the present process, furthermore, is also characterized by containing heavy metals such as, for example, zinc, copper, chrome, nickel and/or cadmium and the like.

Control of the quantity of organic material is effected by pre-selection and formal control of the incoming waste, and selection of the material itself with a dry residue at about 550°C of not less than 40 %.

As mentioned above, the preliminary steps of screening, storage, demetallization and optional modification of the pH can be performed with methods known in the art. For example, demetallization can be effected by a magnet, while screening can be performed by belts, vibrating riddles, grilles and the like.

The storage step occurs at the end of the demetallization step; this latter, in its turn, taking place at the end of the screening step. The applicants have now found that, thanks to the storage steps, it is possible to optimize the moisture content and the physical characteristics of the material. In a preferred embodiment, therefore, the storage step takes place also between the screening and the demetallization steps.

Steps a-e above can be carried out by the use of apparatus known to experts in the field, and make it possible to obtain a treated (or selected) waste material suitable for being subjected to the mixing step f).

According to one embodiment, the present process also comprises a optional step of pH adjustment, which can be performed at the end of step d), or, preferably, during the mixing step f). Said step of adjusting the pH can be performed, for example, by the addition of a phosphoric acid derivative, in order to adjust the pH to values comprised between about 5 and about 11.5, measured using a pH meter according to methods known to experts in the field. Advantageously, in this pH range it is possible to increase the degree of stability of the end product obtained, especially as regards the release of heavy metals from the composition obtained in the form of aggregates.

The applicants have furthermore found that thanks especially to the mixing step f), it is possible to obtain the aggregates by the mechanical/physical route, through mixing the treated waste with cement and additives, in a suitable granulator, for example a fixed or mobile reactor.

To this end, the treated material is initially mixed with a superfluidizing additive, preferably acrylic. In one embodiment, said additive is an aqueous solution of acrylic polymers, even more preferably an aqueous solution having a concentration comprised between 25% and 35% by weight of acrylic polymers, free from formaldehyde. An example of a preferred superfluidizing additive is Dynamon-SP1® (Mapei).

After the addition of the additive, the composition is allowed to react for several minutes and subsequently the cement is added thereto.

For this purpose, it is possible to use any type of cement known in the art, for example of type I Portland, in the form of cement paste (or grout). Preferably the cement is of Portland type (for general reference see for example http://it.wikipedia.org/wiki/Cemento).

In any event, the cement chosen is used in the present process in quantities comprised between about 15% and 35% by weight, with respect to the total weight of the composition, even more preferably comprised between about 20% and 30%. It is in fact observed that lower or higher percentages may lead to final compositions having mechanical strength and/or compactness poorly suited for the use as aggregates for concrete. Cement, in fact, is especially useful as a binder and hardener because it is capable, by hydrating with water or atmospheric moisture, of conferring to the composition of the invention a mechanical strength similar to that of a stone. To this effect, after the addition of the cement, the mixture is allowed to react for several minutes and if necessary water is added thereto. The addition of water may be necessary in cases where the formed cement mixture has a moisture level that is too low or lower than the limits indicated above.

Subsequently, the cement material thus obtained is added with a further inertizing polymerization additive, capable of triggering the inertization process, typically by the radical route. Preferably said additive comprises a polymeric component A and an inorganic component B. In one embodiment, said inertizing additive comprises an anionic acrylic polymer, preferably anionic polyacrylamide (component A) and aluminium sulphate, preferably anhydrous (CAS No. 10043-01-3), as component B. An example of said two-component inertizing additive is the product known as Re-Con Zero® (Mapei).

In practice, the inertizing polymerization additive can be added in a single step or, preferably, in two separate steps, depending for example on the composition and the nature of the additive itself. In any case, in the present process the polymeric component A is firstly added, in amounts comprised between 0.3 and 0.7 kg/m³, followed by the addition of the second inorganic component B in amounts comprised between 5 and 7 kg/m³. In this way it is possible to trigger the inertization reaction of the material itself, according to the present process.

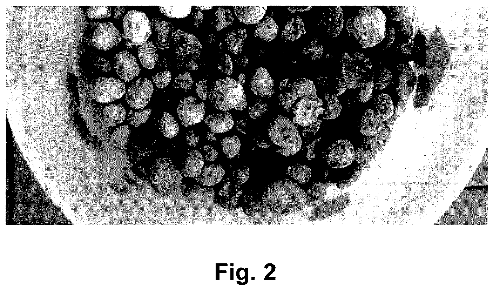

In one embodiment, therefore, the step f) of the present process comprises the steps of:
mixing the material obtained from step e) with a superfluidizing additive, preferably an aqueous solution having a concentration comprised between 25% and 35% by weight of acrylic polymers, free from formaldehyde;
subsequent addition of cement;
addition of anionic polyacrylamide (component A); and aluminium sulphate (component B), said steps preferably being performed in the order indicated. The applicants have in fact observed that the order of addition of the cement and the inertizing polymeric additive to the two components (A and B), can considerably affect the efficiency of the entire process and the physical and mechanical characteristics of the material so obtained. In particular, it is preferable to add the two components A and B as indicated above without there being premixing of said components, and in such a way that component A is added first, followed at a distance of several minutes, preferably of 5-10 minutes, by component B. In this way, in fact, it is possible to obtain a mass which has the physical characteristics required for the subsequent step of curing and crushing, and which has the appearance of a stone, as illustrated for example in Figure 2.

Preferably during the mixing step f), the present process requires the presence (together with the treated waste material) of the cement and additives referred to above of a granulation initiator. In practice, the initiator can be any component capable of triggering and promoting the mechanical breakdown of the mixture, thus substantially avoiding the formation of a single compact mass.

The presence of said initiator is therefore useful for favouring the formation of the final mixture in the form of pseudo-spherical aggregates, preventing the formation of a material having too large dimensions, which would be unlikely to lead to the desired granular product. Thanks to the mechanical action of the mixing, this initiator crushes the mass in agitation leading to the formation of aggregates having a form and dimensions which, after curing and fragmentation as described in detail below, prove to be particularly suited to use as an inert component for the formulation of concrete.

Preferably, said initiator is an aggregate of the final composition.

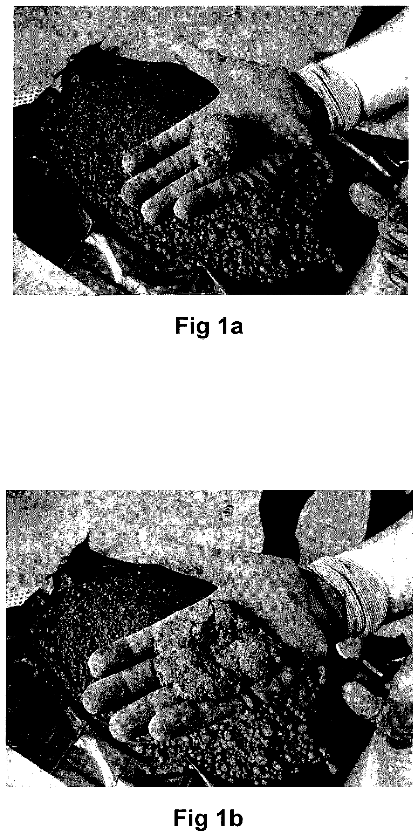

After the addition of the inertizing additive to the two components A and B referred to above, the cement composition assumes the appearance of malleable and ductile granules, as may be deduced from the enclosed figures 1a and 1b. Figure 1a shows a granule of the material obtained at the end of the mixing step f), which has a relatively low consistency and hardness. To this effect, and as shown in figure 1b, it only requires light pressure to alter the shape of the aggregate of figure 1a, which demonstrates the soft character, lacking in strength, of the composition obtained at the end of step f). The material thus obtained, therefore, is subjected to the subsequent steps of first controlled curing g), crushing h) and second curing i), so as to obtain the derivative endowed with high physical and mechanical strength, as illustrated in figure 2.

In particular, the step g) of first controlled curing is important because by that the material can solidify, thanks especially to the intrabinding action of the additive with the two components A and B, and of the cement. This latter, in fact, during the resting time of the soft, moist mass obtained after mixing, is able to initiate the binding action, thus compacting both the individual aggregates (intrabinding action) and the entire mass containing the plurality of aggregates (interbinding action).

During this curing it is therefore important to avoid the interbinding action between the aggregates prevailing over the intrabinding action, internal to each aggregate. If this were to occur, in fact, a compact, solid final mass would be obtained, having dimensions equal to the entire mass and unsuitable for the preparation of an aggregate for concretes.

Preferably, the curing g) occurs at an external temperature comprised between about 15°C and about 40°C, for a time comprised between 1 and 24 hours depending on the temperature. In this connection, if curing exceeds the required times, during subsequent crushing the mass thus obtained would lead to the formation of solid blocks, showing inadequate physical and mechanical characteristics, poorly suited for the specific use. Similarly, too short curing times would lead to the formation of friable granular material, easily broken up and having a degree of compactness and/or solidity making it scarcely usable as an inert component for the formulation of concrete.

The subsequent crushing (step h) of the mass obtained after step g), made up of solid aggregates weakly bonded together, is performed by means of a physical treatment, for example by mechanical movement or by means of displacement, for example with shovels. If necessary, it is possible to subject the aggregates obtained with the present process to a screening procedure, in order to obtain final aggregates with the desired grain size, for example having similar dimensions and/or geometry.

The step i) of second curing is important because in this way the crushed material solidifies and becomes inert, thanks especially to the intrabinding action of the previously mixed additives and the cement. The latter, in fact, by resting the aggregates obtained after crushing, is able to solidify them, thus compacting the individual aggregates (intrabinding action).

Preferably, the curing i) occurs at a temperature comprised between about 15°C and about 40°C, even more preferably for a time of at least 5 days.

The end of step i) can be checked, for example, by means of cylinder compaction tests, and by calculating the aggregates' final crush resistance. Crush resistance is an indicator of the hardness and therefore of the stability of the aggregate obtained, and may depend on the cement curing start and finish times, the storage temperature and the dimensions of the mass being cured. In the present process, the final curing step is prolonged until compaction factors are obtained preferably greater than 6 MPa, measured in accordance with UNI EN 13055-1:2003.

As indicated above, the present process makes it possible to obtain a cement composition in the form of granules, usable especially as an inert component for the formulation of concretes. The composition in the form of aggregates can completely or partially replace the natural aggregates commonly used as components for concrete. In any case, it is possible to obtain excellent properties for concrete containing the present aggregates, comparable with or even superior to those of concretes obtained for example using the common natural aggregates, such as limestone and the like.

Furthermore, thanks to the present invention, it is possible to recycle hazardous wastes in a safe and eco-compatible manner. The present process, in fact, make it possible to have a low environmental impact because thermal or washing treatments are substantially avoided, differently from what happens in the known art for the treatment of hazardous wastes. It should be noted that besides the preferred use as inert components for the formulation of concrete, the composition can also be put into landfill or used as inert non-hazardous waste, without requiring additional inertizing treatments.

### EXPERIMENTAL SECTION

### Description of the mixing step f) of the present process

| **Reagents** | **Grams** | **Times (minutes)** | **Procedures** |
|---|---|---|---|
| ASH Fraction 0-16 mm Cement Type 1 (purity 52.5) | 50.000 | 1-5 | The selected waste material in the form of ash, obtained after screening, demetallization and storage, is rotated together with cement in a pre-mixer before admixture of the additives |
| | 11.300 | | |
| Water Dynamon-SP1® (Mapei) | 1.840 | 1-5 | About 80% of the necessary water is then introduced into the pre-mixer, together with the chosen additive. |
| | 122 | | |
| Water | 460 | 1-5 | The remaining 20% of the necessary water is introduced into the pre-mixer and mixing continues to make the mass as homogeneous as possible. |
| Re-Con Zero® (Mapei) (additive A) | 17 | 5-10 | The mixture is transferred into a rotating reactor and additive A is then added. |
| Re-Con Zero® (Mapei) (additive B) | 200 | 5-10 | Additive B is then added. |

In this way it is possible to obtain the material shown in photographs 1a and 1b.

Said material is then subjected to controlled curing for about 12 hours at about 25°C, and then mechanically crushed and left to cure for a second time for about 7 days, resulting in the final material shown in figure 2, with a crush resistance of about 8 MPa.

## Claims

1. A process for the preparation of a composition useful as an inert component for the formulation of concrete, comprising the following steps, preferably in the order indicated:
a) preselection and selection of a starting waste material,
b) screening,
c) optional storage,
d) demetallization,
e) storage,
f)
- suitable mixing of the material obtained from step e) with a superfluidizing additive, preferably an aqueous solution having a concentration comprised between 25% and 35% by weight of acrylic polymers, free from formaldehyde;
- addition of cement;
- addition of an anionic acrylic polymer, preferably anionic polyacrylamide; and
- subsequent addition of aluminium sulphate,
g) first controlled curing, preferably for a time comprised between 1 and 24 hours,
h) crushing,
i) second curing, preferably for at least 5 days.

2. The process according to claim 1, wherein said anionic acrylic polymer is added in quantities comprised between 0.3 and 0.7 kg/m³, followed by the addition of aluminium sulphate in quantities comprised between 5 and 7 kg/m³.

3. The process according to any one of the preceding claims, wherein the mixing step f) occurs in the presence of a granulation initiator.

4. The process according to any one of the preceding claims, further comprising the regulation of the pH between 5 and 11.5, preferably after the step of demetallization d) or during step f).

5. The process according to any one of the preceding claims, wherein the second curing i) occurs at a temperature comprised between 15°C and about 40°C.

6. The process according to any one of the preceding claims, wherein the cement is of Portland type.

7. The process according to any one of the preceding claims, wherein the cement is used in amounts comprised between 15% and 35% by weight compared with the final weight.

8. The process according to any one of the preceding claims, wherein the starting waste material comprises an organic fraction lower than 1.5% by weight, compared with the total weight.

9. The process according to any one of the preceding claims, wherein the starting waste material is chosen between: waste from thermal processes, material arising from land reclamation and sludge from industrial treatment and, preferably, heavy ash.

## Patentansprüche

1. Verfahren zur Herstellung einer Zusammensetzung, die als inerte Komponente für die Formulierung von Beton verwendbar ist, umfassend die folgenden Schritte, vorzugsweise in der angegebenen Reihenfolge:
a) Vorauswahl und Auswahl eines Ausgangsabfallmaterials,
b) Screening,
c) optionale Lagerung,
d) Demetallisierung,
e) Lagerung,
f)
- geeignetes Mischen des aus Schritt e) erhaltenen Materials mit einem suprafluidisierenden Additiv, vorzugsweise einer wässrigen Lösung mit einer Konzentration zwischen 25 Gew.-% und 35 Gew.-% Acrylpolymeren, frei von Formaldehyd;
- Zugabe von Beton;
- Zugabe eines anionischen Acrylpolymers, vorzugsweise eines anionischen Polyacrylamids; und
- nachträgliche Zugabe von Aluminiumsulfat,
g) erste kontrollierte Aushärtung, vorzugsweise für eine Zeitspanne zwischen 1 und 24 Stunden,
h) Zerkleinerung,
i) zweite Aushärtung, vorzugsweise für mindestens 5 Tage.

2. Verfahren nach Anspruch 1, wobei das anionische Acrylpolymer in Mengen zwischen 0.3 und 0.7 kg/m³ zugegeben wird, gefolgt von der Zugabe von Aluminiumsulfat in Mengen zwischen 5 und 7 kg/m³.

3. Verfahren nach einem der vorhergehenden Ansprüche, wobei der Schritt zum Mischen f) in Gegenwart eines Granulationsinitiators erfolgt.

4. Verfahren nach einem der vorhergehenden Ansprüche, ferner umfassend die pH-Regulierung zwischen 5 und 11.5, vorzugsweise nach dem Schritt zur Demetallisierung d) oder während des Schrittes f).

5. Verfahren nach einem der vorhergehenden Ansprüche, wobei die zweite Aushärtung i) bei einer Temperatur zwischen 15°C und etwa 40°C erfolgt.

6. Verfahren nach einem der vorhergehenden Ansprüche, wobei der Beton vom Typ Portland ist.

7. Verfahren nach einem der vorhergehenden Ansprüche, wobei der Beton in Mengen zwischen 15 Gew.-% und 35 Gew.-%, im Vergleich mit dem Endgewicht, verwendet wird.

8. Verfahren nach einem der vorhergehenden Ansprüche, wobei das Ausgangsabfallmaterial einen organischen Anteil von weniger als 1.5 Gew.-%, im Vergleich mit dem Gesamtgewicht, umfasst.

9. Verfahren nach einem der vorhergehenden Ansprüche, wobei das Ausgangsabfallmaterial ausgewählt ist unter: Abfall aus thermischen Prozessen, Material im Zusammenhang mit der Landgewinnung und Schlamm aus der industriellen Behandlung und vorzugsweise Schwerasche.

## Revendications

1. Procédé pour la préparation d'une composition utile comme composant inerte pour la formulation de béton, comprenant les étapes suivantes, de préférence dans l'ordre indiqué :
a) présélection et sélection de déchets bruts,
b) criblage,
c) stockage éventuel,
d) démétallisation,
e) stockage,
f)
- mélange approprié du matériau obtenu à l'étape e) à un additif super-fluidifiant, de préférence une solution aqueuse ayant une concentration comprise entre 25 et 35 % en poids de polymères acryliques, sans formaldéhyde ;
- ajout de ciment ;
- ajout d'un polymère acrylique anionique, de préférence un polyacrylamide anionique ; et
- ajout à postériori de sulfate d'aluminium,
g) première cure contrôlée, de préférence pendant une durée comprise entre 1 et 24 heures,
h) broyage,
i) seconde cure, de préférence pendant au moins 5 jours.

2. Procédé selon la revendication 1, dans lequel ledit polymère acrylique anionique est ajouté dans une quantité comprise entre 0.3 et 0.7 kg/m³, suivi par l'ajout du sulfate d'aluminium dans une quantité comprise entre 5 et 7 kg/m³.

3. Procédé selon l'une quelconque des revendications précédentes, dans lequel l'étape consistant à effectuer le mélange à l'étape f) se déroule en présence d'un initiateur de granulation.

4. Procédé selon l'une quelconque des revendications précédentes, comprenant de plus la régulation du pH entre 5 et 11.5, de préférence après l'étape de démétallisation d) ou pendant l'étape f).

5. Procédé selon l'une quelconque des revendications précédentes, dans lequel la seconde cure i) se déroule à une température comprise entre 15°C et environ 40°C.

6. Procédé selon l'une quelconque des revendications précédentes, dans lequel le ciment est du type Portland.

7. Procédé selon l'une quelconque des revendications précédentes, dans lequel le ciment est utilisé dans des quantités comprises entre 15% et 35% en poids comparativement au poids final.

8. Procédé selon l'une quelconque des revendications précédentes, dans lequel les déchets bruts comprennent une fraction organique inférieure à 1.5% en poids comparativement au poids total.

9. Procédé selon l'une quelconque des revendications précédentes, dans lequel les déchets bruts sont choisis parmi : des déchets provenant de processus thermiques, de matériau provenant de la mise en valeur des sols et de boues provenant de traitements industriels et, de préférence, de soude dense.
